Europäisches Patentamt

European Patent Office

Office européen des brevets

(11) Publication number : **0 477 030 A1**

## (12) EUROPEAN PATENT APPLICATION

(21) Application number : **91308612.0**

(22) Date of filing : **20.09.91**

(51) Int. Cl.⁵ : **G11B 5/584, G11B 21/10**

(30) Priority : **21.09.90 JP 252928/90**

(43) Date of publication of application :
**25.03.92 Bulletin 92/13**

(84) Designated Contracting States :
**DE FR GB**

(71) Applicant : **SHARP KABUSHIKI KAISHA**
**22-22 Nagaike-cho Abeno-ku**
**Osaka 545 (JP)**

(72) Inventor : **Iwamatsu, Tadashi**
**9-14-201, Shiba-machi 1-chome, Saidaiji**
**Nara-shi, Nara-ken (JP)**
Inventor : **Okuda, Tohru**
**7-12, Hiramatsu 3-chome**
**Nara-shi, Nara-ken (JP)**

(74) Representative : **Brown, Kenneth Richard et al**
**R.G.C. Jenkins & Co. 26 Caxton Street**
**London SW1H 0RJ (GB)**

(54) **Magnetic head assembly suitable for servo tracking.**

(57)   A magnetic head assembly includes a fixed end member (8), two leaf springs (7a, 7b) extending parallel facing each other from the fixed end member (8), a free end member (5) coupled to free ends of the two leaf springs (7a, 7b), a combination magnetic head (3) fixed to the free end member (5), and magnetic head driving device (15) provided in a space surrounded by the fixed end member (8), the two leaf springs (7a, 7b) and the free end member (5) for driving the combination magnetic head (3) in the direction where the two leaf springs (7a, 7b) deflect.

FIG.2

EP 0 477 030 A1

## BACKGROUND OF THE INVENTION

### Field of the Invention

The present invention relates to magnetic head assemblies for magnetic recording/reproducing apparatus, and particularly to a magnetic head assembly suitable for servo tracking on magnetic tape in a serpentine recording/reproducing method.

### Description of the Background Art

Conventionally, in a magnetic recording/reproducing apparatus used as an audio apparatus, except ones provided with rotary heads, the number of tracks on magnetic tape is normally equal to the number of recording heads or reproducing heads. The number of tracks means the total number of data tracks formed parallel along the direction of tape run. In such a magnetic recording/reproducing apparatus, means for maintaining the relative position of a magnetic tape and a magnetic head is provided. Generally, a guide post having a pair of flanges for guiding both edges in the width direction of magnetic tape is provided on a tape running path, for example, to limit positional variations of the tape in the width direction with respect to the fixed magnetic head.

On the other hand, as a back-up memory device in an information processing system, a magnetic recording/reproducing apparatus generally referred to as a cassette streamer is used. Such a magnetic recording/reproducing apparatus can write in and read from a plurality of tracks on magnetic tape by a serpentine recording/reproducing method. In the conventional serpentine recording/reproducing method, a pair of recording head and reproducing head for performing recording and reproducing when the tape is running in one direction and another pair of recording head and reproducing head for recording and reproducing during the tape is running in another direction are used.

These two pairs of recording heads and reproducing heads are moved in the width direction of the magnetic tape to be positioned on desired tracks, whereby data is written in a desired one of the plurality of data tracks and read out from the track. As means for determining the relative position of a magnetic head and a magnetic tape, for example, as disclosed in Japanese Patent Laying-Open No. 62-183019, the art is known wherein a magnetic head is positioned on a desired track by the open-loop control of a stepping motor in addition to a guide post as described above.

Furthermore, a combination head including a number of magnetic heads has been developed with development in thin film magnetic heads. A multitrack magnetic recording/reproducing apparatus having such a combination head is capable of recording with higher density. In such an apparatus, information is recorded on a track having narrow width, and the permitted amount of off-track is small. Accordingly, for tracking control with high accuracy, head driving means for moving a magnetic head in the width direction of the tape is used in addition to a guide post as described above controlling variations of the magnetic tape in the width direction as relative position determining means of the tape and head, wherein the magnetic head is controlled so that it follows waving of the magnetic tape.

Examples of such apparatus include a digital audio tape recorder having a fixed type head in which the number of recording heads or reproducing heads which are respectively paired with these recording heads is equal to the number of recording tracks. In such an apparatus, on the magnetic tape, two servo tracks recorded parallel to a plurality of information tracks are traced by two reproducing heads correspondingly arranged in the width direction of the tape. By comparing the two reproduced servo outputs, the amount of off-track due to waving of the magnetic tape is detected. The fixed type magnetic head can be automatically displaced only a little in the width direction of the tape so that the amount off-track is minimized.

In another example of relative positioning means of tape and head, a structure for magnetically detecting relative positions of both edges of the magnetic tape and the magnetic heads in a magnetic recording/reproducing apparatus in which the number of heads and the number of tracks are equal to each other is disclosed in Japanese Patent Publication No. 63-64811.

However, as a guide post having a pair of flanges prevents variations in the width direction of the magnetic tape with the both edges of the magnetic tape in contact with the flanges, there is a fear that the both edges of the magnetic tape may be damaged due to mechanical stresses when the interval between both flanges is smaller than the width of the magnetic tape even just a little. Accordingly, the guide post can only limit the variations in the width direction of the magnetic tape in a range of approximately several tens $\mu$m. That is, in the magnetic recording/reproducing apparatus with high density in which a permitted amount of off-track is about several tens to several $\mu$m, it is insufficient to minimize variations in the width direction of the magnetic tape with a guide post.

Although it is possible to narrow the track width of magnetic tape by narrowing the width of a magnetic head for further enhancing the recording density, the track pitches cannot be made smaller than a certain level since there is a limit in integration of thin film heads. Also, an increase in the number of heads makes larger the circuit scale related to the same larger, resulting in an increase in manufacturing cost. Accordingly, in a high density magnetic recording/reproducing apparatus with the number of tracks of several tens to several hundreds having track pitch of several tens μm, it is difficult to make the number of heads and the number of tracks equal to each other.

On the other hand, in a multi-track magnetic recording/reproducing apparatus which is called a cassette streamer utilizing the serpentine recording/reproducing method, information is stored and reproduced on a number of tracks with limited number of magnetic heads being moved in the tape width direction, so that even if the track pitch is small and the number of tracks increases, thin film heads do not have to be integrated very densely on a combination head.

However, when the track pitch is several tens μm, for example, the track width is also several tens μm as a matter of course, and the permitted off track amount is as small as several tens to several μm accordingly. Then, with control of tape running with a guide post and open loop control of a magnetic head position with a stepping motor, it is difficult to keep the off-track amount within the range of the permitted amount.

Accordingly, it is proposed to enhance the accuracy of tracking control of the magnetic head by detecting a relative position of a magnetic head and a magnetic tape with a sensor and feed-back controlling a head driving means with the detected signal.

However, in order to implement tracking control with accuracy of several μm, it is necessary that a supporting mechanism of the magnetic head, a driving force source of the magnetic head, a driving force transmitting mechanism of the magnetic head and a relative position detecting sensor for the magnetic tape and the magnetic head operate with high accuracy. However, in a conventional head driving means having a driving force source utilizing a rotation motor such as a stepping motor, a mechanism for converting the rotation movement of the motor into the liner movement, a bearing support member and the like, not only that its structure is complex but also a dead zone in the servo control is large, so that high control accuracy is not expected.

Furthermore, introducing a magnetic head support mechanism according to the prior art using two parallel leaf springs, the magnetic head is likely to be affected by the secondary resonance of the support mechanism, resulting in difficulty in feedback control with wide band and high loop gain. Although the effect of the secondary resonance can be prevented to some extent by appropriately selecting dimensions of leaf springs, the volume occupied by the two parallel leaf springs in that case is generally considerably large.

## SUMMARY OF THE INVENTION

In view of the above-described prior art, it is an object of the present invention to provide a magnetic head assembly suitable for tracking control with high accuracy of a combination head for enabling recording/reproducing with high speed, high density and high capacity in a magnetic recording/reproducing apparatus employing a serpentine recording/reproducing method.

A magnetic head assembly according to the present invention includes a fixed end member, two leaf springs extending parallel facing each other from the fixed end member, a free end member attached to free ends of the two leaf springs, a combination magnetic head fixed to the free end member, and a head driving means provided in a space surrounded by the fixed end member, two leaf springs and the free end member for driving the combination magnetic head in the direction in which the two leaf springs deflect.

In a magnetic head assembly according to the present invention, a combination head is supported by a free end member fixed to free ends of two leaf springs extending from a fixed end member, which can be displaced along an axis parallel to the direction in which both of the leaf springs deflect. Using a voice coil type linear motor as head driving means, to the movement of a combination head, servo control with high accuracy having substantially no dead zone and frictional load can be applied. Furthermore, since the head driving means is provided in the space between the two leaf springs, a small-size and light weight magnetic head assembly effectively using the space can be obtained.

As a result, recording/reproducing with high speed, high density and high capacity by the serpentine recording reproducing method is enabled.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a drawing for describing the serpentine recording/reproducing method.

Fig. 2 is a perspective view'of a magnetic head assembly according to one embodiment of the present invention.

Fig. 3 is a diagram showing dimensions of a plate spring employed in the magnetic head assembly of Fig. 2.

Fig. 4 is a diagrammatic view illustrating one example of transfer characteristics of a spring system

Fig. 5 is a board diagrammatic view illustrating another transfer characteristics of a spring system.

Fig. 6 is a diagram describing the serpentine recording/reproducing method for high recording density.

DESCRIPTION OF THE PREFERRED EMBODIMENTS

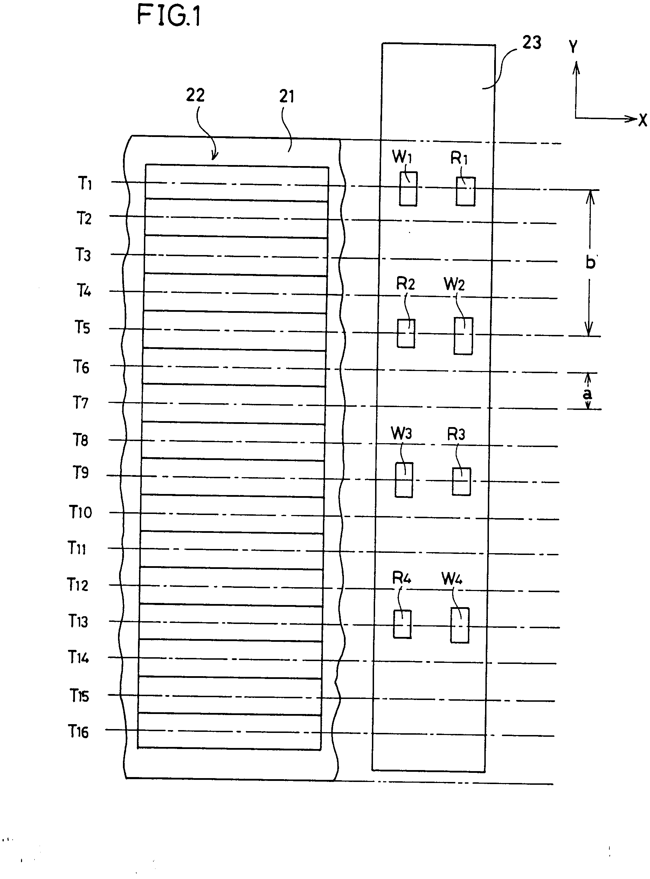

Referring to Fig. 1, a serpentine recording/reproducing method utilized in the present invention will be described first. In the figure, the arrow X indicates a direction in which a magnetic tape 21 runs and the arrow Y indicates a width direction of magnetic tape 21. A group of tracks 22 are formed on magnetic tape 21. The group of tracks 22 include sixteen tracks $T_1$ - $T_{16}$ formed at pitches (a) in the Y direction.

A combination magnetic head 23 includes four recording heads $W_1$ - $W_4$ and the same number of reproducing heads $R_1$ - $R_4$. Recording heads $W_1$ - $W_4$ are provided in a zig-zag way at pitches (b = 4a) along the Y direction. Each of reproducing heads $R_1$ - $R_4$ is paired with each of magnetic heads $W_1$ - $W_4$, which are provided at predetermined distance in the X direction or in the -X direction. That is, among the pairs of magnetic heads and reproducing heads, in the odd numbered pairs $W_1$ - $R_1$ and $W_3$ - $R_3$, reproducing heads are provided on the right side of recording heads. On the other hand, in even numbered pairs $W_2$ - $R_2$ and $W_4$ - $R_4$, reproducing heads are provided on the left side of recording heads.

In recording operation or reproducing operation, combination head 23 is first driven to a position shown in Fig. 1. At this position, the center of recording head W1 and reproducing head R1 coincides with the center of track $T_1$. Similarly, the center of a recording head $W_2$ and a reproducing head $R_2$ coincides with the center of a track $T_5$, the center of a recording head $W_3$ and a reproducing head $R_3$ coincides with the center of a track $T_9$, and the center or a recording head $W_4$ and a reproducing head $R_4$ coincides with the center of a track $T_{13}$.

In the recording operation, the magnetic tape 21 is run in the X direction, where tracks $T_1$ and $T_9$ are simultaneously subjected to recording by recording heads $W_1$ and $W_3$. When the recording reaches the left end of tape 21, magnetic tape 21 is next run in the -X direction, where tracks $T_5$ and $T_{13}$ are simultaneously subjected to recording by recording heads W2 and $W_4$.

Upon completion of recording to the right end of tape 21, combination head 23 is moved by the distance (a) in the -Y direction, and positioned so that the center of recording head $W_1$ and reproducing head $R_1$ coincides with the center of track $T_2$. Maintaining the relative position of combination head 23 and tape 21, magnetic tape 21 is run again in the X direction, and then tracks $T_2$ and $T_{10}$ are subjected to recording by recording heads $W_1$ and $W_3$. Upon completion of recording in tracks $T_2$ and $T_{10}$, magnetic tape 21 is run in the -X direction, and then tracks $T_6$ and $T_{14}$ are subjected to recording by recording heads $W_2$ and $W_4$. Similarly, all the tracks $T_1$ - $T_{16}$ are recorded.

In the above-described example, since the number of recording heads is 4 for the number of tracks 16, four positions exist in the relative positional relationship of magnetic tape 21 and combination head 23.

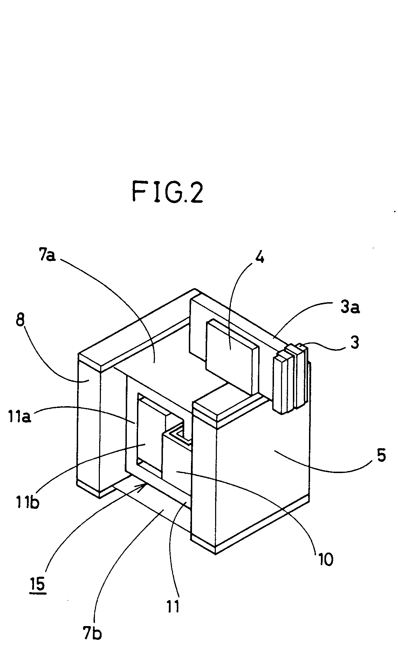

Referring to Fig. 2, a magnetic head assembly according to one embodiment of the present invention is shown in a perspective view. A combination head 3 for recording/reproducing on a magnetic tape is attached to a support plate 3a held by a holder 4. Holder 4 is fixed on a free end member 5. Free end member 5 is coupled to free ends of two leaf springs 7a and 7b extending parallel facing to each other from a fixed end member 8. Fixed end member 8 is fixed to a main frame (not shown) of a magnetic recording/reproducing apparatus.

As driving means for moving combination head 3 in the width direction of the tape, a voice coil type linear motor 15 can be employed. Voice coil type linear motor 15 includes a magnetic circuit 11 fixed to fixed end member 8 and a coil 10 for producing a driving force. Magnetic circuit 11 includes a rectangular yoke 11a fixed to fixed end member 8 and a magnet 11b attached on the yoke 11a. Free end member 5 is coupled to coil 10, which can be moved corresponding to the movement of coil 10.

Voice coil type linear motor 15 is located between two leaf springs 7a and 7b, so that the space surrounded by the fixed end member 8, the two leaf springs 7a and 7b and free end member 5 can be effectively utilized.

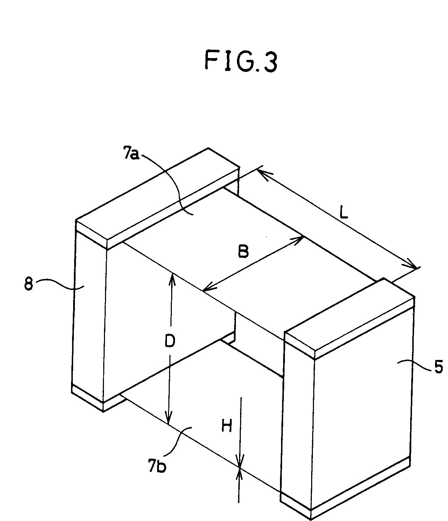

Referring to Fig. 3, dimensions related to leaf springs 7a, 7b in the magnetic head assembly of Fig. 2 are shown. Reference characters L, B and H indicate length, width and thickness of each of leaf springs 7a, 7b, and a character D indicates the distance between two leaf springs 7a and 7b. Table 1 shows dimensions related to two kinds of leaf springs S1 and S2 used as leaf springs 7a, 7b in Fig. 3.

Table 1                                                    (mm)

| Plate Spring | L | B | H | D |
|---|---|---|---|---|
| S1 | 18 | 8 | 0.1 | 10 |
| S2 | 18 | 18 | 0.08 | 16 |

These leaf springs S1 and S2 are formed of beryllium copper.

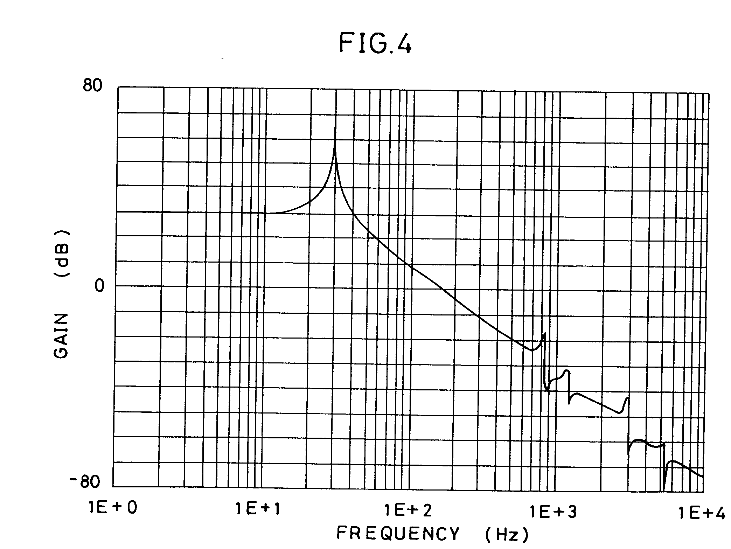

Referring to the graph of Fig. 4, the transfer characteristics of a spring system using the plate spring S1 as leaf springs 7a, 7b are shown. The abscissa indicates frequency (Hz) and the ordinate indicates gain (dB). As clearly seen from the graph, the spring system using plate spring S1 has the primary resonant frequency of 30Hz and the secondary resonant frequency of 800Hz.

However, when performing positioning control using a spring system, the secondary resonant frequency determines the control frequency band, so that it is preferable that the secondary resonant frequency is high for performing servo control in high frequency band.

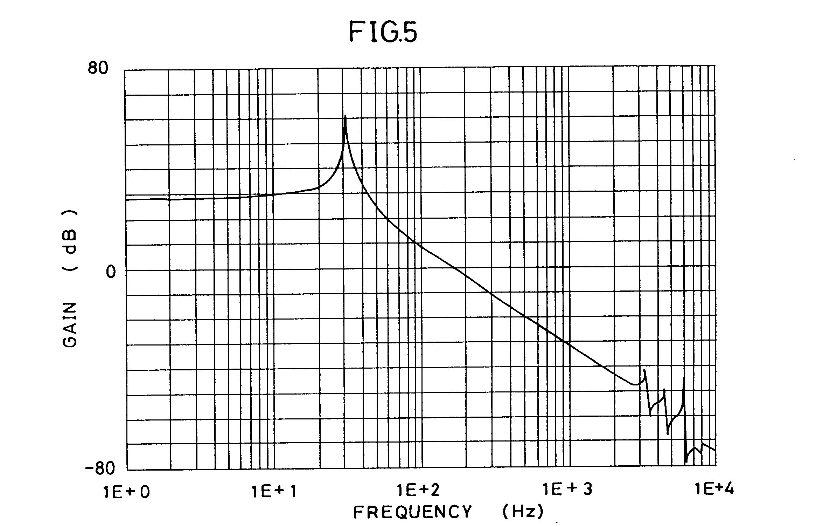

Fig. 5 is similar to Fig. 4, wherein the transfer characteristics of a spring system in which the plate spring S2 having large dimensions is used as leaf springs 7a, 7b are shown. In Fig. 5, it is shown that the spring system has the primary resonant frequency of 30Hz and the secondary resonant frequency of 3KHz. That is, it is understood that the dimensions related to a plate spring should be increased in order to enhance the secondary resonant frequency.

However, there is a general tendency that the size of a magnetic head assembly increases with an increase in dimensions related to leaf springs 7a, 7b. Accordingly, as shown in Fig. 2, provision of linear motor 15 in the space surrounded by fixed end member 8, two leaf springs 7a, 7b and free end member 5 minimizes an increase in size of the entirety of a magnetic head assembly.

Use of a spring system having such transfer characteristics as shown in Fig. 5 enables closed loop servo control with cut-off frequency of about 1KHz with feedback control using a simple servo controller such as a phase compensation and a relative position detecting sensor. For example, servo control with compression ratio of about -60dB is expected with respect to the displacement to one side of the tape, and servo control with compression ratio of about -45dB or higher can be expected with respect to waving of tape to 100Hz.

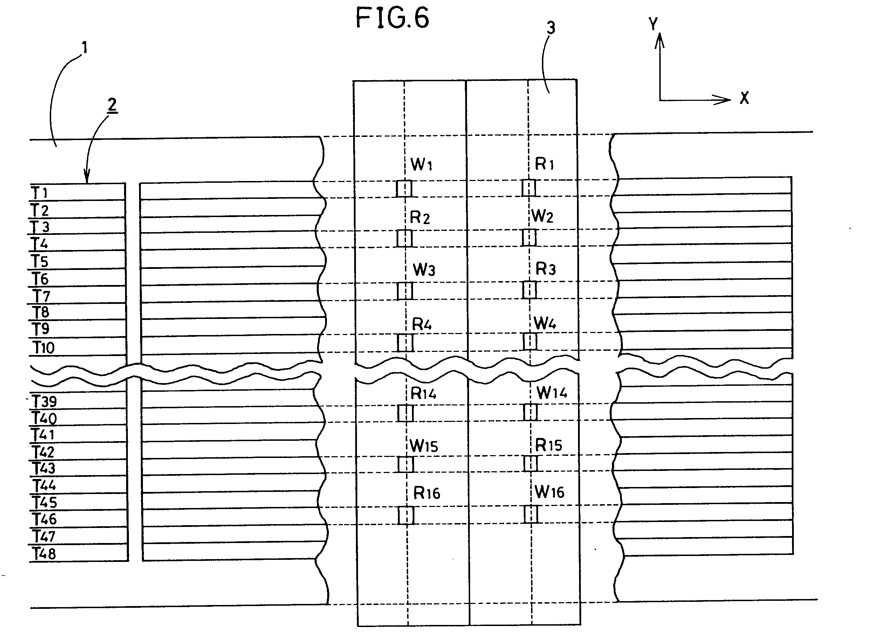

Referring to Fig. 6, a serpentine recording/reproducing method is described in which further higher density recording is enabled by using such a magnetic head assembly as shown in Fig. 2. A magnetic tape 1 includes a group of tracks 2 including 48 tracks $T_1$ - $T_{48}$ formed at predetermined pitches in the Y direction. When magnetic tape 1 having a width of 1/4 inch is used, the track pitch is set to 120$\mu$m. A combination head 3 includes 16 recording heads $W_1$ - $W_{16}$ and the same number of reproducing heads $R_1$ - $R_{16}$. Recording heads $W_1$ - $W_{16}$ are provided in a zig-zag manner at pitches of 360$\mu$m along the Y direction. Each of reproducing heads $R_1$ - $R_{16}$ is paired with each of recording heads $W_1$ - $W_{16}$, which are provided at predetermined distances in the X direction or the -X direction. That is, in the pairs of recording heads and reproducing heads, in odd number pairs, each reproducing head is provided on the right side of each recording head. On the other hand, in even number pairs, each reproducing head is provided on the left side of each recording head.

In such a combination head 3, while magnetic tape 1 runs in the X direction, recording is performed by 8 recording heads $W_{2n-1}$ (n = 1 - 8), and while magnetic tape 1 runs in the -X direction, recording is performed by other 8 recording heads $W_{2n}$ (n = 1 - 8). After magnetic tape 1 goes and returns for one time, combination head 3 can be driven in the $\pm$ Y direction. Changing the relative position of combination head 3 and magnetic tape 1 three times, recording is applied on all the 48 tracks $T_1$ - $T_{48}$.

The reproducing operation can be similarly performed.

As described above, in a magnetic head assembly according to the present invention, when using a linear motor of voice coil type as head driving means, servo control with high accuracy substantially having no dead zone and frictional load can be performed to enable recording/reproducing with high density. The effect of the secondary resonance can be avoided by enlarging dimensions related to leaf springs to enable servo control in higher frequency band. Furthermore, providing head driving means between two leaf springs, a size of the entirety of the magnetic head assembly can be made smaller.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.  A magnetic head assembly suitable for servo tracking with high accuracy on a magnetic tape in a magnetic recording/reproducing apparatus introducing a serpentine recording/reproducing method, comprising:

    a fixed end member (8);

    two leaf springs (7a, 7b) extending parallel facing each other from said fixed end member (8);

    a free end member (5) attached to free ends of said two leaf springs (7a, 7b);

    a combination magnetic head (3) fixed to said free end member (5); and

    head driving means (15) provided in a space surrounded by said fixed end member (8), said two leaf springs (7a, 7b) and said free end member for driving said combination magnetic head (3) in a direction in which said two leaf springs (7a, 7b) deflect.

2.  The magnetic head assembly according to claim 1, wherein said head driving means (15) comprises linear motor means.

3.  The magnetic head assembly according to claim 2, wherein said linear motor means comprises a voice coil.

4.  The magnetic head assembly according to claim 1, wherein said two leaf springs ( 7a, 7b ) are formed of beryllium copper.

5.  A magnetic head unit having a combination magnetic head (3) which includes a plurality of head elements ($W_1$-$W_{16}$, $R_1$-$R_{16}$) for simultaneously scanning respective tracks of a multi-track magnetic tape (1), and a head mounting and drive arrangement by which the head position may be servo-controlled in a direction transverse to the tape running direction to maintain proper tracking, characterised in that said head mounting and drive arrangement comprises a spring mounting member (8), a pair of parallel, mutually facing leaf springs (7a, 7b) each fixed at one end thereof to said spring mounting (8), and a head support member (5) spaced from said spring mounting member (8) and attached to said leaf springs (7a, 7b) and an electromagnetic drive assembly (15) for moving said head support member in the direction of deflection of said leaf springs, said electromagnetic drive assembly being located in a space defined between said leaf springs.

# FIG.1

# FIG.2

# FIG.3

FIG.4

FIG.5

# FIG.6

EP 0 477 030 A1

# EP 0 477 030 A1

**European Patent Office**

## EUROPEAN SEARCH REPORT

Application Number

| DOCUMENTS CONSIDERED TO BE RELEVANT | | | EP 91308612.0 |
|---|---|---|---|
| Category | Citation of document with indication, where appropriate, of relevant passages | Relevant to claim | CLASSIFICATION OF THE APPLICATION (Int. Cl.5) |
| X | US - A - 4 363 046 (SAITO) * Fig. 3-5, 9; abstract * -- | 1-3,5 | G 11 B 5/584 G 11 B 21/10 |
| X | CH - A - 650 610 (SONY CORP.) * Fig. 6,8; abstract * -- | 1 | |
| A | EP - A - 0 148 999 (TOSHIBA K. K.) * Fig. 2; abstract; page 5, line 32-35 * ---- | 1-3,5 | |
| | | | TECHNICAL FIELDS SEARCHED (Int. Cl.5) |
| | | | G 11 B 21/00 G 11 B 5/00 |

| The present search report has been drawn up for all claims | | |
|---|---|---|
| Place of search | Date of completion of the search | Examiner |
| VIENNA | 28-11-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

13